(19) Europäisches Patentamt
European Patent Office
Office européen des brevets

(11) **EP 2 149 632 B1**

(12) **EUROPEAN PATENT SPECIFICATION**

(45) Date of publication and mention
of the grant of the patent:
**31.08.2011  Bulletin 2011/35**

(51) Int Cl.:
***D06B 3/04*** *(2006.01)*    ***A61C 15/04*** *(2006.01)*

(21) Application number: **09251916.4**

(22) Date of filing: **30.07.2009**

(54) **Process for coating dental tape**

Verfahren zum Beschichten eines Zahnbandes

Procédé de revêtement de ruban dentaire

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **31.07.2008  US 85345 P
04.08.2008  US 185337**

(43) Date of publication of application:
**03.02.2010  Bulletin 2010/05**

(73) Proprietor: **Mcneil-PPC, Inc
Skillman, NJ 08558 (US)**

(72) Inventors:
• **Chodzko, John
Manahawkin, NJ 08050 (US)**

• **Ochs, Harold
Flemington, NJ 08822 (US)**

(74) Representative: **Kirsch, Susan Edith et al
Carpmaels & Ransford
One Southampton Row
London
WC1B 5HA (GB)**

(56) References cited:
**EP-A- 0 021 677        WO-A-03/068173
US-A- 3 800 812        US-A- 5 558 901
US-A- 5 603 921        US-A- 5 755 243
US-A1- 2001 003 587    US-B1- 6 293 287
US-B1- 6 371 133**

**Description**

**FIELD OF THE INVENTION**

This present invention relates to a process for evenly and uniformly coating textured tape (e.g., dental tape).

**BACKGROUND OF THE INVENTION**

Dental floss has been in use for more than 100 years for removing plaque and entrapped food particles from between teeth, as well as providing a clean feeling in the mouth. The reduction of bacteria in the mouth is important because bacteria can cause cavities and gum disease. Dental flossing has been shown to remove bacteria in the interproximal as well as in the subgingival regions of the mouth.

The original floss consisted of twisted silk placed in a jar. Since then, many improvements have been made to dental floss to make flossing more convenient and less problematic. Most improvements have been aimed at solving the negative aspects of flossing. These include reducing fraying and breakage, providing easier insertion between teeth and providing a softer, more gum and hand friendly floss. Nylon, a high tenacity fray-resistant yarn, was first used to replace the silk, providing more fray resistance. The addition of wax to twisted multifilament yarn helped anchor fibers together, while providing a lubricious coating for easier insertion. Low friction monofilament PTFE yam coated with wax provides good ease of insertion, depending upon the thickness and lack of twists or folds, as well as improved fray resistance. Unfortunately, PTFE monofilaments do not clean well, nor do they easily remove food particles from the space between teeth due to the low coefficient of friction of PTFE.

Further improvements to flosses were made by providing monofilament tapes made of elastomeric materials which neck down when passing into the interdental space and then expand upon relieving tension. Monofilament dental tapes made of elastomeric materials have been found to be difficult to process. One problem encountered with elastomeric dental tape products of the type described is called "telescoping." In a roll of dental tape or bobbin of dental tape which suffers from telescoping, successive layers of the tape wound upon the core are displaced axially. Thus, the bobbin of tape takes on a generally conical shape rather than the cylindrical shape of a tape product not suffering from telescoping. A bobbin of dental tape suffering from a severe case of telescoping often cannot be mounted on or into a dispenser.

Telescoping may be the result of the elastomeric properties of the material comprising the dental tape. Bobbins of elastomeric tape formed under high tension from supply rolls are more likely to suffer telescoping since the increased tension increases the stress on the bobbin. High tension during the bobbin forming process generally stems from high tape tension during the supply roll forming process. High tension during the supply roll forming process can result from non-uniformities in the velocity or tension (i.e, accelerations and decelerations) on the tape as it is being processed or from additional tape processing such as from the coating process. During the coating process the tape is typically stretched and relaxed as it moves through coating apparatuses, thus further contributing to increased tension. Without being limited by theory, the present inventers have discovered that by lowering the tension at which the supply rolls are formed, the tension is proportionately lowered during the bobbin forming process.

There is a continuing need for coated monofilament tapes that do not have telescoping issues, as well as methods of processing these dental tapes.

WO 03/068173A1 discloses micromesh interproximal devices and three methods for making such devices, each using a die coating mechanism. The mechanism of the first method comprises feeding coating into a chamber through which the interproximal device is drawn. Coating is fed into and flows through the chamber in the opposite direction to that in which the device is being drawn. The second method comprises applying a feed of coating directly between two rollers, between which the interproximal device is squeezed so as to coat the device. The mechanism of the third method comprises a bath of coating through which the interproximal device passes as it is drawn around a roller.

US5603921, US5755246 and EP0021677 each discloses a die coating mechanism adapted to draw a filament, core or fibre of material through a chamber into which a coating is provided. In each case, the coating is provided to the chamber through at least one port and the coating fills the chamber so as to surround the filament, core or fibre and thereby coat it.

**SUMMARY OF THE INVENTION**

This present invention relates to a process for evenly and uniformly coating textured or high surface area tape (or, tape which is not smooth or flat).

In one embodiment, the present invention relates to a process for coating high surface area tape, comprising the steps of:

    a. providing tape having a first side and a second side, the first side being opposite the second side;

b. providing a die coating mechanism comprising;

   i. a base having a horizontal plane;
   ii. an entrance slot for receiving and/or orientating the tape such that the first and second sides are perpendicular to the horizontal plane of the base; and
   iii. an entrance pool having an inlet for receiving a coating composition and first and second passage bore outlets for delivering the coating composition from the first passage bore outlet to the first side of the tape and from the second passage bore outlet to the second side of the tape simultaneously as the tape passes the first and second passage bore outlets; and

c. passing the tape through the entrance slot of the die coating mechanism for coating by the die coating mechanism.

## BRIEF DESCRIPTION OF THE DRAWINGS

**FIG. 1** is a schematic illustration of one embodiment of the manufacturing line for unwinding, coating and rewinding the dental tape of the present invention.

**FIG. 2** is a schematic illustration of one embodiment of the rewind mechanism of the present invention.

**FIG. 3** is a perspective view of a roller coating die according to an exemplary embodiment of the present invention.

**FIG. 4** is an exploded perspective view of a roller coating die according to an exemplary embodiment of the present invention.

**FIG. 5** is a perspective view showing movement of a monofilament tape through entrance and exit blocks and rollers of a roller coating die according to an exemplary embodiment of the present invention.

**FIG. 6** is a top plan view of a roller coating die according to an exemplary embodiment of the present invention.

**FIG. 7** is a cross-sectional view of a roller coating die according to the exemplary embodiment of **FIG. 6** along the plane 7-7.

**FIG. 8** is a cross-sectional view of a roller assembly of a coating die according to the exemplary embodiment of **FIG. 6** along the plane 8-8.

**FIG. 9** is a bottom plan view of a coating die according to an exemplary embodiment of the present invention.

**FIG. 10** is a top plan view of an entrance block of a coating die according to an exemplary embodiment of the present invention.

**FIG. 11** is a right side elevational view of an entrance block of a coating die according to an exemplary embodiment of the present invention.

**FIG. 12** is a bottom plan view of an entrance block of a coating die according to an exemplary embodiment of the present invention.

**FIG. 13** is a front elevational view of an entrance block of a coating die according to an exemplary embodiment of the present invention.

**FIG. 14** is a cross-sectional view of an entrance block pool and coating bores of a coating die according to the exemplary embodiment of **FIG. 10** along the plane 14-14.

**FIG. 15** is a top plan view of an exit block of a coating die according to an exemplary embodiment of the present invention.

**FIG. 16** is a right side elevational view of an exit block of a coating die according to an exemplary embodiment of the present invention.

**FIG. 17** is a bottom plan view of an exit block of a coating die according to an exemplary embodiment of the present invention.

**FIG. 18** is a rear elevational view of an exit block of a coating die according to an exemplary embodiment of the present invention.

**FIG. 19** is a 3 dimentional schematic illustration of one embodiment of coated roll of dental tape showing the helix angle θ formed by the strands of dental tape and the plane rΦ perpendicular to the spool's longitudinal axis z.

**FIG. 20** is a 2 dimentional schematic illustration of one embodiment of coated roll of dental tape showing the helix angle θ formed by the strands of dental tape and side r of plane rΦ and the spacing between the individual strands of dental tape in each layer of dental tape.

**FIG. 21** is a perspetive view of a bobbin spool core.

**FIG. 22a** is right side elevational view of a tape bobbin with tape wound around the bobbin spool core.

**FIG. 22b** is a front elevational view of a tape bobbin with tape wound around the bobbin spool core showing the bobbin spool core width relative to the bobbin tape width.

**FIG. 23a** right side elevational view of a tape bobbin movably positioned within a dispenser (phantom lined).

**FIG. 23b** is a front elevational view of a tape bobbin movably positioned within a dispenser (phantom lined) depicting the relative bobbin spool core, bobbin tape and dispenser widths.

## DETAILED DESCRIPTION OF THE INVENTION

Dental tapes of the present invention are in the form of a single monofilament. As used herein, the terms "tape", "yam" and floss are interchangeable. The tapes may be, for example, circular or rectangular in cross-section with a smooth surface. A monofilament tape in rectangular form typically has a width ranging from about 1.0 mm to 2.0 mm, a thickness ranging from about 0.03 mm to about 0.09 mm, and about 66 to about 200 tex (a denier ranging from about 600 to about 1800). In a specific example, a rectangular monofilament substrate has a width of about 1.8 mm, a thickness of about 0.05 mm, and about 104 tex (a denier of about 940).

Alternatively, the monofilament dental tape of the present invention maybe a high surface area tape or have a substantially higher surface area than the tapes with smooth or non-textured surfaces discussed above. A high surface area tape or a tape of a substantially higher surface area is defined as a tape in which the surface area is 15% (or about 15%), or optionally 20% (or about 20%), or optionally 25% (or about 25%) greater than the surface area of a flat, smooth or non-textured tape of equivalent surface dimensions of length, width and height. By "non-textured", it is meant that the surface has no raised and depressed areas that (1) are capable of being felt by a human hand and/or (2) form contours that are discernible by a human eye without magnification. For example, a millimeter of monofilament tape A of 1.8 mm wide and 0.05 mm thick has a surface area of 3.7 $mm^2$. A millimeter of tape B of the present invention would have the same monofilament tape dimensions of 1.8 mm wide and 0.05 mm thick, but also has surface protrusions and/or indentations (e.g., ribs) such that tape B has a higher surface area than tape A. If there are 11 ribs added onto each side of tape A and each rib is 0.04 mm high and 0.04 mm wide, the surface area of the new tape (i.e., tape B) is increased to 5.46 $mm^2$ or 48%. These tapes have the capacity to anchor a surface coating that may be required to provide the dental tape with functions other than those of interdental cleaning, such as flavoring, bactericide, abrasive, sensate, sialagogue, coloring, aromatizing, therapeutical, etc., in relation to the same characteristics of smooth monofilament tapes.

In one embodiment, dental tapes may comprise a core body having a first external face and a second external face opposite the first external face, wherein at least one of the first and second external faces comprises a plurality of indentations protruding into the core body of the dental tape. The indentations may be provided in from about 5% to about 95% of the total area of the at least one of the first and second external faces, and may have a depth within the core body, in relation to the at least one of the first and second external faces comprising the plurality of indentations, corresponding to from about 0.1% to about 50% of the thickness of the core body, taken transversally to the at least one of the first and second external faces comprising the plurality of indentations. Tapes such as these are disclosed in U.S. Patent Application No. 12/026,839 (published under US 2008/0230087 A1).

In another embodiment, monofilament dental tapes according to the present invention may comprise a core body having first and second opposing cleaning surfaces, where at least one of the cleaning surfaces comprise a plurality of ribs disposed along the length thereof. As used herein, the term "rib" means a structural element integral with and protruding from the core body of the dental tape, which element has a configuration and dimension effective to provide for removal of plaque and/or food debris from interdental spaces of a mammal. Ribs may protrude substantially perpendicularly from the core body of the dental tape or at an angle. Tapes such as these are disclosed in U.S. Patent Application No. 11/937,025 (published under US 2009/0120455 A1).

In certain embodiments, the tape is made using an elastomeric material. Elastomeric materials provide a high degree of compressibility when extruded in the cross-sectional configurations of this invention, allowing it to slip through the tight spaces between teeth. Once in the cavity between teeth and into the interdental space, the tape substantially recovers from compression, providing cleaning surfaces that act as scrapers to remove plaque and food particles from between the teeth. Elastomeric materials that may be used to form the multi-ribbed monofilament dental tape of the present invention include, but are not limited to polyamide-polyether block copolymers sold under the tradename PEBAX (Ato Chimie, Hauts-de-Seine France), such as PEBAX 7033, 5533 MX1205, 4033, 3533, and 2533; polyester-polyether block copolymers and polyester-polyester block copolymers sold under the tradename HYTREL (E. I. du Pont de Nemours & Co., Wilmington, DE), such as HYTREL 7246, 5556, and 4056; aliphatic thermoplastic polyurethane elastomers sold under the tradename TECOFLEX (Lubrizol Advanced Materials, Inc., Cleveland OH); aromatic thermoplastic polyurethane elastomers sold under the tradename PELLETHANE (Dow Chemical Co., Midland, Mn; and thermoplastic polyolefin elastomer sold under the name MULTI-FLEX (Dow Chemical Co., Midland, MI). A more detailed discussion regarding such elastomeric materials and their use in manufacturing dental tape can be found in U.S. 6,591,844 to Barlow et al. filed 8/23/2001 and U.S. 6,029,678 to Tsao et al. filed 1/21/1998.

The dental tape of the invention may also be made from a substrate referred to as a pseudo-monofilament yam. Pseudo-monofilament tapes are made by extruding bicomponent fibers typically having a core of one polymer and a sheath of a different polymer, then either partially or totally melting the sheaths of the fibers to bond or fuse the fibers, resulting in a monofilament appearance and feel.

In preferred embodiments of the present invention, coatings can be placed on the first and/or second cleaning surface of the dental tape. Coating compositions for use in the present invention must reliably adhere to the surface of elastomeric monofilament dental tape as well as non-elastomeric tapes, whether the tape is a monofilament or pseudo-monofilament yam. By "reliably" as used herein is meant that the coating composition must have sufficient adherence to keep about 95%, optionally about 90%, optionally about 85% of the coating on the surface of the tape during coating, winding, shipping and unwinding of the tape. By "pseudo-monofilament" is meant tapes made by extruding multi- and/or bi-component fibers typically comprising a core of one polymer and a sheath of a different polymer and, then, either partially or totally melting the sheaths of the fibers to bond and/or fuse the fibers resulting in a monofilament appearance and/or feel.

Suitable insoluble coatings include, but are not limited to, microcrystalline wax, beeswax, paraffin waxes, low molecular weight polyethylenes, silicone oils, essential oils, and mineral oil. Typically, the insoluble wax coatings have melting temperatures ranging from about 25°C to about 100°C, optionally from about 35°C to about 80°C. The waxes may be combined with water insoluble colorants that are FD&C approved for use in the mouth. Suitable colorants include, but are not limited to, synthetically derived colorants such as FD&C Blue #1 Lake, FD&C Blue #2 Lake, FD&C Red #40 Lake, Erythrosin Lake, Amaranth Lake, Ponceau 4R Lake, Carmoisosine Lake, Carmine Lake and colorants generated by converting a naturally derived dye to an aluminum or calcium based salt. Natural colorants such as titanium dioxide and the like may also be used.

The coating composition applied to the dental tape may be a soluble coating, i.e., the coating is such that it tends to dissolve or disperse in saliva present in the oral cavity. Such soluble coatings include soluble waxes or the like, which include, but are not limited to, low molecular weight polyethylene glycols ("PEGs"), such as PEG 1000 and PEG 1450. Combinations of higher molecular weight PEGs and lower molecular weight PEGs, such as a mixture of PEG 3350 and PEG 1000 may be used. Blends of liquid PEG's with high molecular weight PEG's may also be used.

Other coatings include meltable surfactants such as Polyoxamer 407; sialagogues; olfactory stimulants; sensates; essential oils; actives, such as fluoride; cetyl pyridinim chloride (CPC); tetra sodium pyrophosphate; whitening agents such as calcium peroxide, hydrogen peroxide, carbamide peroxide and other peroxide compounds capable of generating hydrogen peroxide in-situ; antimicrobials; anti-virals and mixtures thereof.

Such ingredients may be employed as solids, liquids, particles, gels, or the like, and may be encapsulated in conventional polymeric materials by conventional encapsulation techniques to form encapsulated materials having a polymeric shell and a core comprising the ingredient in one of the noted forms, as the case may be. Such ingredients also may be applied directly to the dental tapes of the present invention without the need for a coating carrier, where appropriate.

A coating comprising an insoluble wax may be applied, wherein the coating contains encapsulated components such as spray dried flavors, essential oils, or other ingredients protected and released from soluble spheres within the insoluble wax, or a soluble coating may be applied directly to the yam or over the insoluble coating. The soluble coating may contain ingredients that are placed directly in the wax or through the use of spray dried or other encapsulation technologies commonly practiced within the art.

In certain embodiments, two insoluble coatings are applied to the fiber substrate. In these embodiments, the second coating composition should have a lower melting point than the first coating composition.

A soluble coating can be used by itself or as a second coating over an insoluble coating. One or both coatings can contain colorants, flavors, sweeteners, abrasives, anti-tartar agents, actives, such as fluoride salts, and like additives known in the art.

Additional components can be added to coatings for various benefits. These include flavor systems, such as spray dried flavors, flavor enhancers, and sweeteners, such as sodium saccharin. The amount of flavor added typically ranges from 10 percent to 25 percent, based on the total weight of the coating composition. The amount of sweetener typically ranges from 0.1 percent to 1 percent, based on the total weight is of the coating composition.

Other components can be added to coatings to assist in cleaning the teeth. These include actives including abrasives such as silica or di-calcium phosphate, and anti-tartar agents such as tetra-sodium-pyrophosphate. Where two coatings are used, actives are usually added in the second soluble coating to guarantee that a high percentage of the active will be released from the floss during use.

In formulating a coating, it is desirable to limit the amount of solid additives in the coating composition below about 30% by weight. Coating a dental tape with a coating composition having a solid additive content above this amount may cause difficulty in achieving uniformity of coating and reduce the ability of the coating to adhere to the tape surface. Coatings containing high amounts of solid additives may tend to flake off during processing and during use of the final product.

The dental tape coating may be anhydrous or hydrous. When the coating is hydrous, the water is evaporated upon drying.

The coating may be applied as an add-on typically ranging from about 10 percent to about 60 percent, optionally from about 20 percent to about 50 percent, based on the weight of the fiber substrate.

In certain embodiments, the dental tape is manufactured using equipment and processes capable of doing the following:

1. Feeding monofilament tapes to the coating die at a controlled speed and tension so as to avoid telescoping issues,
2. Pumping the coating composition in a uniform fashion into an application die,
3. Uniformly and simultaneously applying the coating composition to both sides of the dental tape, and
4. Providing a sufficient period of time during which the coating composition is substantially undisturbed on the dental tape until it is solidified intact.

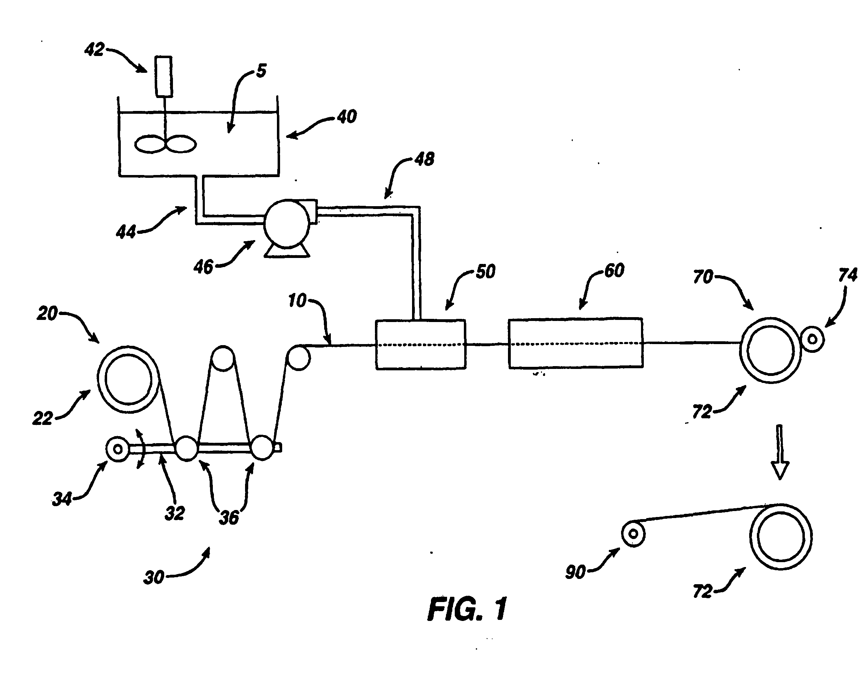

By "uniform" or "substantially uniform," it is meant that, when manually (without the aid of measuring instrumentation) or visually (without the need for magnifying devices beyond corrective eyewear) inspected, the coating should have an even (or relatively [or, substantially] even) thickness and be free from (or sufficiently [or substantially] free from) defects (such as pinholes or voids) in the coated area. The above-mentioned process for manufacturing the monofilament dental tape of the invention is illustrated in **FIG. 1.** In the first step, the coating composition **5,** typically a wax, is liquefied if necessary, as by heating, in a mix tank **40.** A high sheer mixer **42,** such as a Rotostat High Sheer Mixer Model #XPBL, made by Admix, can be used to keep coating composition **5** homogeneous. Typically, a Rotosolver head blade is used in the high sheer mixer **42** and is operated at, e.g., 1700 rpm.

The coating composition is then allowed to flow from mix tank **40,** via a first pipe **44** into a positive displacement pump **46** which, when driven at a given speed, delivers a constant amount of coating, via a second pipe **48,** to a coating die **50.** The positive displacement pump can be a vane type positive displacement pumps, piston pumps, or similar type pumps. In certain embodiments, a Kerr piston pump, supplied by Kerr Corp. Sulfur Ok., is used. Piston pumps, generally, facilitate the evenness and uniformity of coatings where the coating composition **5** contains solid particulates such as abrasives. In certain embodiments, positive displacement pumps are used since the passage bores, pipes, channels or outlets used in such embodiments to deliver coating composition **5** are generally positioned or oriented such that the directional path or track of the passage bores, pipes, channels or outlets points upwardly and toward or horizontally level with and toward the position of the dental tape **10** to be coated such that gravity has no effect or minimal effect on the flow of the coating composition from mix tank **40** onto the dental tape **10.**

In certain embodiments, the dental tape **10** is simultaneously fed and pulled through the process by a combination of a powered unwinding system **20** and a floss rewinding system **70.** The dental tape **10** is fed or unwound at a low tension and, in certain embodiments, pulled perpendicularly from feed spool **22** across or through sensing arm assembly **30.** Sensing arm assembly **30** is provided for monitoring the tension of the dental tape **10** as it enters coating die **50.** In certain embodiments, the sensing arm assembly **30** has an arm **32,** a pivot point **34,** and rollers **36** over which the dental tape **10** passes. Sensing arm assembly **30** is used to maintain a substantially constant low feeding or unwinding tension on dental tape **10** by adjusting the speed of power unwinding system **20** as it is simultaneously fed and pulled into the coating process system. In certain embodiments, where the dental tape passes through the coating process at line speed rates greater than about 5.1 meters per second (mps) (about 1000 feet per minute (fpm)), or optionally from about 7.6 mps to about 12.7 mps (about 1500 fpm to about 2500 fpm), or optionally from about 10.2 mps (about 2000 fpm), the constant low unwinding tension is generally maintained at from about 50 grams-force to about 60 grams-force for dental tape **10** having about 44 to about 133 tex (a denier of about 400 to about 1200).

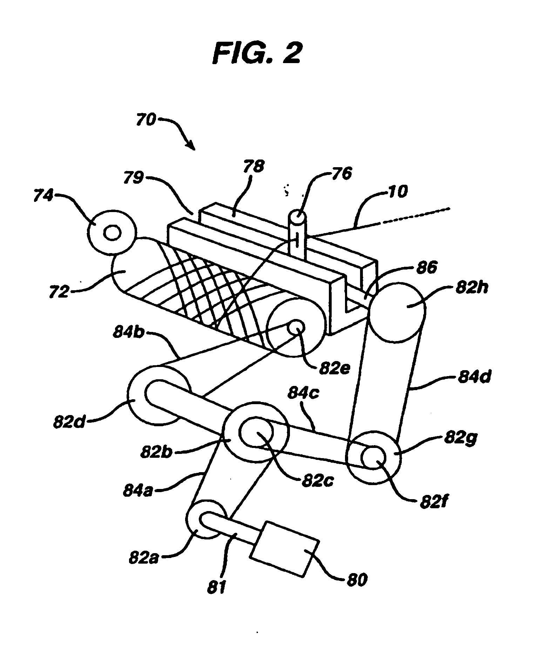

After coating, dental tape **10** is collected on a take-up spool **72.** The speed at which take-up spool **72** operates is controlled by an electronic controller system. The controller may be a computer, a programmable logic controller or similar device. In the embodiment shown in **FIG. 1,** a speed sensing roll **74** rides on surface of the tape on take-up spool **72.** Speed sensing roll 74 generates a signal which is fed to an electronic controller, such as a Fenner M-drive. The controller controls the voltage of motor **80** (shown in **FIG. 2)** which drives the speed of take-up spool 72. The use of the signal generated by speed sensing roll 74 in controlling the speed of take-up spool 72 helps to maintain a constant speed or velocity of the dental tape **10** through the coating process, controlling and maintaining the tension on dental tape 10 to less than 250 or (about 250) grams-force. The electronic controller also controls the speed of positive displacement pump **46.** Thus the velocity of dental tape **10** is maintained while a constant amount of coating composition 5 is pumped into the coating die **50.**

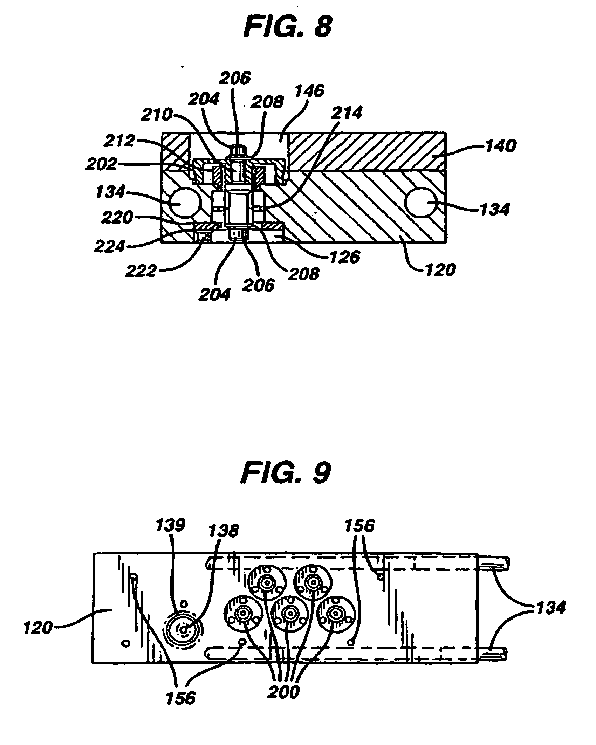

In certain embodiments, not shown in **FIG. 1,** the coating die **50** contains at least two rollers around which dental tape **10** has at least some wrap. In certain embodiments, the number of rollers can range from 2, optionally 3, optionally 4 or greater rollers, or optionally 2 to 7 rollers or, optionally, from 3 to 5 rollers. Generally, dental tape **10** wraps around the rollers at from about 90° to about 270°. The rollers assist in applying coating composition 5 to dental tape **10.** Downstream of the rollers there is typically a slot die region where coating composition 5 is smoothed onto the surface of dental tape **10.** In certain embodiments, the slot die is in the form of a groove having parallel sides or walls, the groove, optionally, having a radius at its bottom for guiding the dental tape into a slot. In certain embodiments, the slot is sized such that excess coating is removed from dental tape **10** as it passes through the die (as shown at **FIG. 8)** while, at the same time, minimizing any additional tension on dental tape **10** caused by the slot die as the tape **10** passes through the die. As will be apparent to those skilled in the art, the dimensions of the groove and slot will depend upon such factors as the denier and type of dental tape **10** and the amount of coating composition 5 being applied thereto.

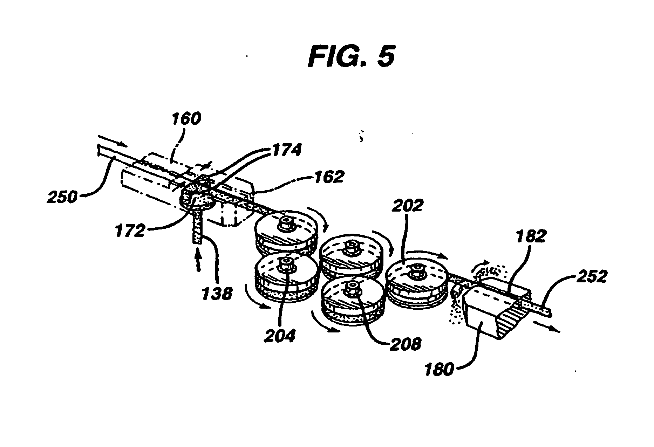

In certain embodiments, a coating die useful in coating high surface area dental tapes may be used. Such coating dies are adapted to receive or orientate the dental tape **10** such that the planar surface of the dental tape **10** is in a vertical position (or oriented such that the width dimension of dental tape **10** is perpendicular to horizontal plane of the coating die base) (as described in **FIG. 5).** Without being limited by theory, it is believed that such a vertical orientation better facilitates evenness and uniformity of the coating across the sides of the planar surface of the dental tape **10** than does movement of a horizontally oriented tape through the coating die.

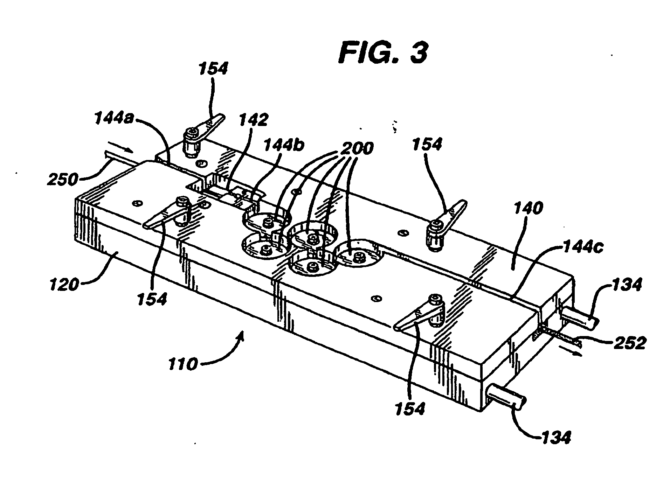

One embodiment of a coating die useful in coating high surface area dental tapes is shown in **FIGS. 3** to **18. FIG. 3** is a perspective view of roller coating die **110,** including roller die base **120** and cover plate **140.** Uncoated dental tape **250** enters coating die **110** such that the planar surface of the dental tape **250** is vertically oriented or oriented such that its width dimension of dental tape **250** is perpendicular to roller die base **120.** Dental tape **250** traverses vertically along cover plate die slot **144** and roller assemblies **200,** and exits as vertically oriented, coated dental tape **252. FIG. 3** shows three sections of cover plate slot **144.** Slot **144a** traverses from the die entrance to entrance block window **142.** Slot **144b** traverses from entrance block window **142** to roller assemblies **200.** Slot **144c** traverses from roller assemblies **200** to the die exit.

Optionally, heaters can be incorporated into or associated with the coating dies of the present invention. The heaters are used to provide temperatures sufficient to keep the coating composition, typically a waxy material, flowable or a liquid state. Such temperatures typically range from 180°F to about 200°F (about 82°C to 93°C). **FIG. 3** shows an exemplary embodiment of the present invention having two cartridge heaters **134,** which can be used for heating the rollers and/or other components of coating die **50.**

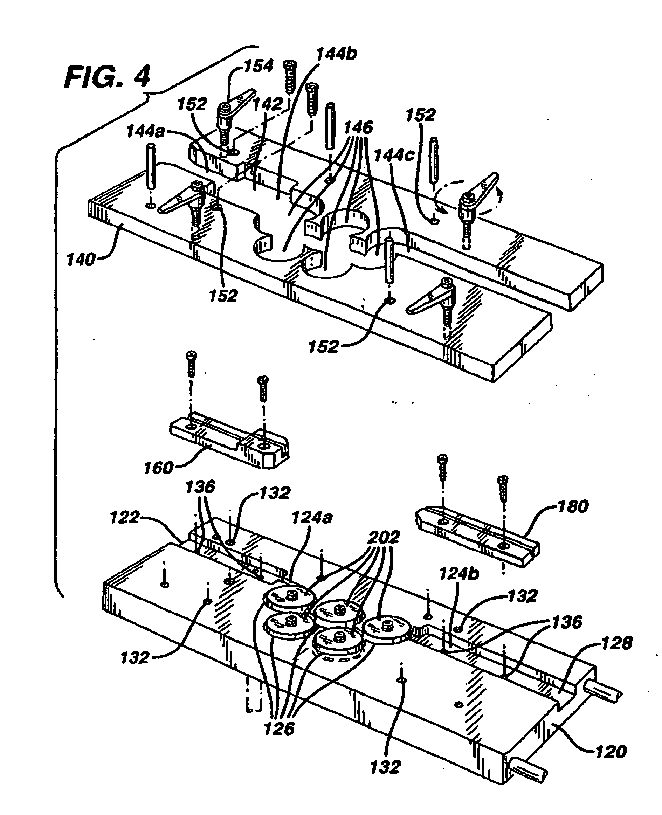

**FIG. 4** is an exploded perspective view of roller coating die **110,** showing more details of roller die base **120** and cover plate **140.** In addition to the three sections of cover plate slot **144** and cover plate window **142,** five roller wheel windows **146,** and four cover plate attachment holes **152** are shown on cover plate **140.** Cover plate attachment holes **152** align with roller die base attachment holes **132.** Roller die base attachment holes **132** are threaded. Threaded handle **154** is used to hold together roller die base **120** and cover plate **140.**

Roller die base **120** includes entrance block recess **122,** roller assembly recesses **126,** exit block recess **128,** roller die base attachment holes **132,** and entrance and exit block attachment holes **136. FIG. 4** shows two sections of base slot **124.** Base slot **124a** traverses from entrance block recess **122** to roller assembly recesses **126.** Slot **124b** traverses from roller assembly recesses **126** to exit block recess **128.** Entrance and exit block attachment holes **136** are threaded.

**FIG. 4** also shows entrance block **160,** exit block **180,** as well as five rollers **202.** Entrance block **160** and exit block **180** are positioned between roller die base **120** and cover plate **140,** and are used to guide uncoated dental tape **250** from the entrance of coating die **110** to roller assemblies 200, and coated dental tape **252** from roller assemblies **200** to the exit of coating die **110.**

**FIG. 5** is a perspective view showing details of how roller coating die **110** transforms uncoated dental tape **250** to coated dental tape **252. FIG. 5** shows uncoated dental tape **250** proceeding into entrance block **160** at a vertical orientation and travelling along and between the walls (or opposite sides) of entrance block slot **162.** Entrance block slot **162** is sized wide enough to produce minimal tension on the vertically oriented, uncoated dental tape **250,** but narrow enough that gravity does not cause the lower portion of the uncoated dental tape **250** to receive more coating than the upper portion of the uncoated tape **250.** Coating travels vertically through base passage hole **138** to entrance block pool **172,** and splits into two coating bores (or passages) **174.** In one embodiment, uncoated dental tape **250** is coated simultaneously on both sides as it passes coating bores **174.** Coated dental tape **252** then passes around rollers **202** with at least some wrap while maintained in its vertical orientation. Generally, coated dental tape **252** wraps around the rollers at from 90° to 270°. Rollers **202** assist in uniformly applying coating composition to coated dental tape **252.** Though **FIG. 5** shows five rollers, it is understood that coated dental tape **252** may pass around as few as one roller, or as many as about twenty or more rollers. Downstream of rollers **202** is exit block **180.** Coated dental tape **252** proceeds into exit block **180** still vertically oriented and travels along exit block slot **182** which aid in maintaining the vertical orientation of dental tape **252.** As mentioned above, the width **182a** of exit block slot **182** is sized to provide coating composition **5** an additional opportunity to be smoothed onto the surface of coated dental tape **252** and also removes excess coating composition **5** while at the same time minimizing any additional tension caused by movement of dental tape **252** through exit block **180.**

Note that all slots discussed above, including cover plate slots **(144a, 144b, 144c),** base slots **(124a, 124b),** entrance block slot **162,** and exit block slot **182** may be in the form of a groove having parallel sides or walls, the groove optionally having a radius at its bottom. As will be apparent to those skilled in the art, the dimensions of the groove will depend upon such factors as the denier and type of uncoated dental tape **250** and the amount of coating composition being applied thereto.

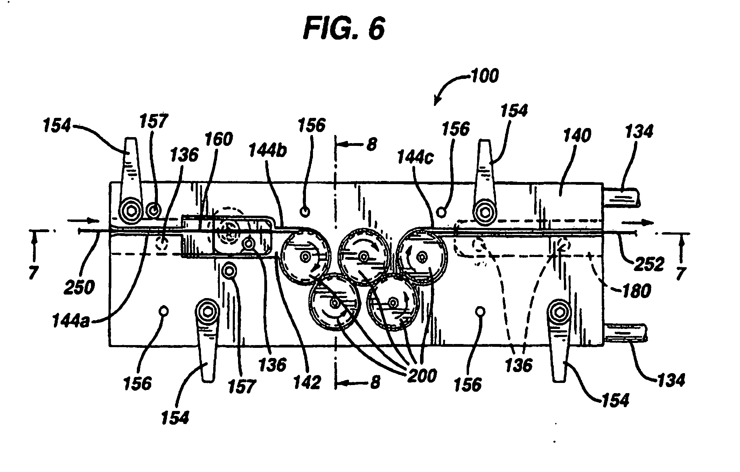

**FIG. 6** is a top view of an embodiment of coating die **110** showing details of the cover plate **140** and the monofilament coating path. **FIG. 6** shows uncoated dental tape **250** proceeding into entrance block **160** where it is coated. Coated dental tape **252** proceeds around roller assemblies **200** to exit block **180** and out of a coating die **110.** Entrance block **160** is partially hidden by cover plate **140,** but is visible through cover plate window **142.** Roller assemblies **200** can be seen through roller wheel windows **146.** Exit block **180** is hidden by cover plate **140,** but coated dental tape **252** is visible through cover plate slot **144c. FIG. 6** also shows threaded handle **154,** which are used to hold cover plate **140** to roller die base **120,** as well as alignment holes **156** to align cover plate **140** to roller die base **120** prior to attaching the two.

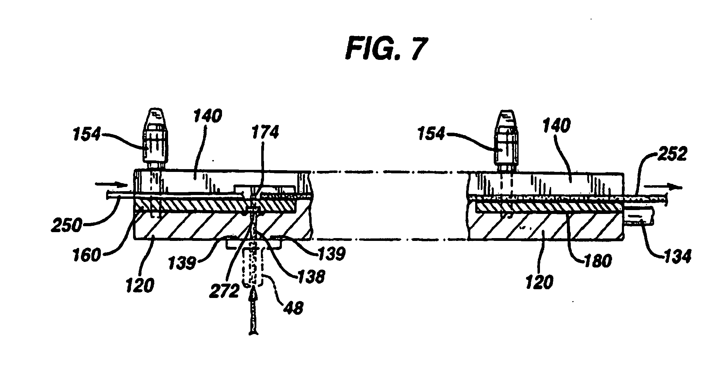

**FIG. 7** is a cross-sectional view of the coat die **110** embodiment of **FIG. 6** along plane 7-7. **FIG. 7** shows uncoated dental tape **250** proceeding into entrance block **160.** Coating travels vertically from second pipe 48 (or coating dispensing pipe receiving coating from displacement pump 46) through base hole **138** to entrance block pool **172,** and splits into two coating bores **174** (**FIG. 7** shows one of the two bores). In one embodiment, uncoated dental tape **250** is coated simultaneously on both sides as it passes coating bores **174. FIG. 7** also shows coated dental tape **252** travelling through exit block **180** and out of a coating die **110.** Threaded handles **154,** which are used to hold cover plate **140** to roller die base **120,** as well as cartridge heaters **134,** which can be used if needed to keep coating composition, in a liquid state, are also shown in the figure.

**FIG. 8** is a cross-sectional view of the embodiment of **FIG. 6** along plane 8-8. **FIG. 8** shows cover plate **140,** roller die base **120,** cartridge heaters **134,** as well as detailed view of roller assembly **200.** Roller assembly **200** includes roller **202** which assist in uniformly applying coating composition to coated dental tape **252.** In certain embodiments, one end of stub shaft **210** is disposed in center of roller **202,** and attached to roller **202** by cap screw **204,** flat washer **206,** and lock washer **208.** The central portion of stub shaft **210** is disposed in inner ring shield bearing **212.** The opposing end of stub shaft **210** is disposed in bearing retainer **220,** and attached to bearing retainer **220** by cap screw **204,** flat washer **206,** and lock washer **208.** Bearing retainer **220** is attached to roller die base **120** by bearing retainer cap screw **222** and bearing retainer lock washer **224.** In one embodiment, three sets of cap screws **222** and lock washers **224** are used to attach bearing retainer **220** to roller die base **120.** However, one skilled in the art could use more or less screws to attach the two, or other means of attachment known in the art. Finally, inner ring shield bearing **212** is kept approximately centered in roller assembly recess **126** and roller wheel window **146,** by outer race spacer **214.**

**FIG. 9** is a bottom view of an embodiment of a roller coating die of the present invention. The **FIG. 9** shows five roller assemblies **200,** base hole **138,** cartridge heaters **134,** and alignment holes **156** on roller die base **120.** An O-ring **139,** is used to prevent leakage of coating composition between positive displacement pump and roller die base **120.** Alignment holes **156** are used to align cover plate **140** to roller die base **120** prior to attaching the two.

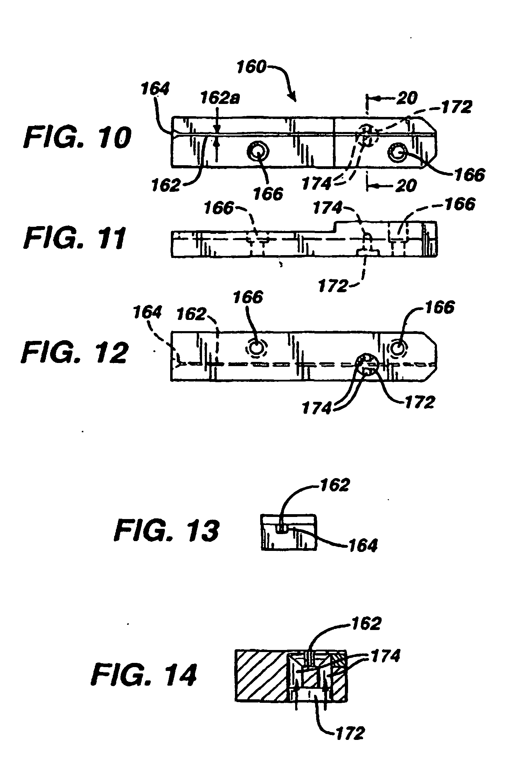

**FIGS. 10** through **14** show details of entrance block **160.** The **FIG. 10** shows entrance block slot **162** and entrance block slot guide **164.** Entrance block slot guide **164** is a V-shaped or tapered cut in entrance block **160** to guide uncoated dental tape **250** into entrance block slot **162.** The entrance block slot **162** is sized at a width **162a** such that it maintains the vertical orientation of uncoated dental tape **250** through the entrance block **160,** as well as facilitate coating as mentioned above, with little to no additional tension on the dental tape **250.** Uncoated dental tape **250** travels along entrance block slot **162** to where it is coated. Coating travels vertically from entrance block pool **172** into two coating bores **174.** Uncoated dental tape **250** is coated simultaneously on both sides as it passes coating bores **174.** **FIGS. 10** to **12** show two optional entrance block holes **166** which may be used to attach entrance block **160** to roller die base **120.**

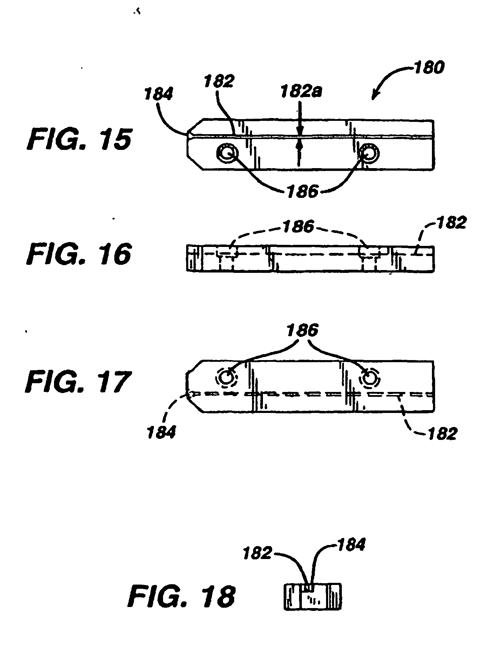

**FIGS. 15** through **18** show details of exit block **180. FIG. 15** shows exit block slot **182** and entrance block slot guide **184.** Entrance block slot guide **184** is a V-shaped cut in exit block **180** to guide coated dental tape **252** into exit block slot **182.** Exit block slot **182** allows coating composition an additional opportunity to be smoothed onto the surface of coated dental tape **252.** The width **182a** of exit block slot **182** is sized to provide coating composition **5** an additional opportunity to be smoothed onto the surface of coated dental tape **252** and also removes excess coating composition **5** while at the same time minimizing any additional tension caused by movement of dental tape **252** through exit block **180.** Coated dental tape **252** travels along exit block slot **182** until it leaves roller coating die **110. FIGS. 15** to **17** show two optional exit block holes **186** which may be used to attach exit block **180** to roller die base **120.**

While illustrated as separate components, it will be readily understood by the skilled artisan that entrance block **160** and exit block **180** (along with their distinct structural characteristics) can be integral with roller die base **120** and/or cover plate **140** without changing the performance or function of coating die **110.** Maintaining entrance block **160** and exit block **180** as separate components. however, provides the convenience of interchangeability. For example, separate entrance block **160** and exit block **180** components allow for the interchange of entrance block **160** and/or exit block **180** with entrance and exit blocks of differing slot **(162, 182)** and slot guide **(164** and **184)** widths.

Coating composition **5** once applied to dental tape **10** must be solidified. Solidification can be accomplished by having a cooling area **60.** Cooling area **60** can be an open area where coating **5** cools under ambient conditions. Alternatively, cooling area **60** can be a chamber where refrigerated or room air is blown over dental tape **10** to increase the rate of cooling. In order to avoid undesirable discontinuities in coating **5,** dental tape **10** should not contact any surfaces until coating **5** has solidified.

Once coating **5** is cooled sufficiently to prevent any disruption of the outer surface, it is rewound on floss rewinding system **70**. Rewinding system **70,** shown in **FIG. 2,** has take-up spool **72** and speed sensing roll **74** as described before, as well as a drive motor **80,** a series of timing belts (all labeled **84)** and timing belt pulleys (all labeled **82)**, and a traversing cam guide **76** disposed on a traverse barrel cam **86**. For 2.7kg (6 pound) rolls or less, optionally 2.3kg (5 pounds) or less, or optionally 1.8kg (4 pounds) of less of dental tape rolled onto spool **72,** the tension of the dental tape **10** is monitored using conventional tension measuring devices (such as Checkline, supplied by Electromatic Equipment Co., Cedarhurst, NY) prior to rewinding and the speed adjusted accordingly such that the tension of the dental tape **10** during rewinding process is less than 300 (or about 300) grams-force, optionally less than 250, (or about 250) grams-force or optionally from about 190 grams-force to about 200 grams-force. Traversing cam guide **76** and traverse barrel cam **86** are disposed in a traversing cam guide housing **78** which has a traversing cam guide housing slot **79**.

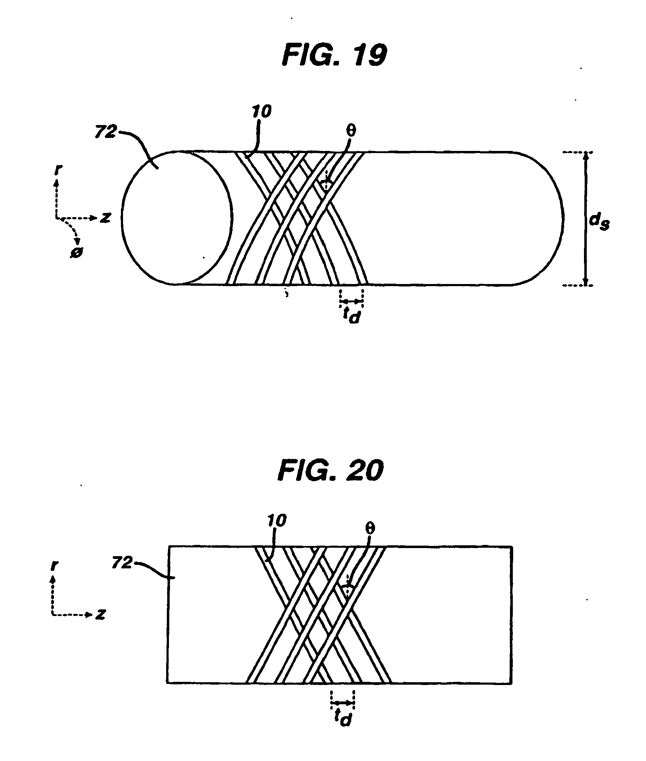

Rewinding system **70** is a traversing rewinder in that as take-up spool **72** rotates, traversing cam guide **76** is traversed back and forth along its length (see **FIG. 2).** The take-up spool **72** has a longitudinal axis z; a plane rΦ which is perpendicular to longitudinal axis z. and a circumference C (equal to the product of the spool core diameter $d_s$ and π) as shown in **FIG. 19**. Rewinding system **70** functions as follows: spindle **81** of motor **80** rotates to drive timing belt pulley **82a,** which, through timing belt **84a,** drives timing belt pulleys **82b** and **82c**. Timing belt pulley **82b** drives timing belt pulley **82d,** which, in turn, drives timing belt pulley **82e** via timing belt **84b**. Timing belt pulley **82e** is disposed on the end of take-up spool **72,** so as it rotates, take-up spool **72** rotates. Timing belt pulley **82c,** via timing belt **84c,** drives timing belt pulleys **82f** and **82g**. Timing belt pulley **82g** drives timing belt pulley **82h** via timing belt **84d**. Timing belt pulley **82h** is disposed on the end of traverse barrel cam **86,** so as pulley **82h** rotates, traverse barrel cam **86** rotates. Traversing cam guide **76** is disposed on traverse barrel cam **86** such that when traverse barrel cam **86** rotates, traversing cam guide **76** traverses back and forth along its length. Suitable traversing rewinders can be readily built or purchased from companies such as Leesona Corporation.

In certain embodiments, the pulley sizes and traverse barrel cam are selected for the rewinding system as described below:

a.) the pulleys are selected (or adjusted) such that the product of the pulley ratios or Ratio A (which determines the traversing movement of traversing cam guide (inches) per revolution of Spool **72** (inches)) is as follows:

$$\text{Ratio A} = P_1/P_2 \ X \ P_3/P_4 \ X \quad P_{Z\text{-}1}/P_Z$$

Where $P_1$ through $P_Z$ are the pulley sizes of the sequentially ordered pulleys from the pulley rotating the take-up spool **72** or $P_1$ to the pulley rotating traverse barrel cam **86** or $P_Z$ used in association with

b.) the traverse barrel cam **86,** which is selected such that the product of the cam advance (or, total length [end to end] traversed by traversing cam guide **76** divided by the turns of the traverse barrel cam **86** needed to achieve the total traverse of traversing cam guide **76**) and Ratio A when divided by the circumference C of the core of take-up spool **72** (i.e., take-up spool **72** without tape **10**) produces a Ratio B, where

$$\text{Ratio B} = (\text{cam advance} \ X \ \text{Ratio A}) / \text{Circumference C}$$

and where Ratio B provides a helix angle θ of from about 3.5 degrees to about 5 degrees, where the helix angle θ is formed by a strand of dental tape and plane rΦ of the spool **72** which is perpendicular to the longitudinal axis z of the spool **72** as shown in **FIGS. 19** and **20** and is determined by formula:

$$\sin\text{-}1 \ (\text{Helix Angle } \theta) = \text{Ratio B}$$

Without being limited by theory, it is believed that obtaining a helix angle θ of about 3.5 degrees to about 5.5 degrees provides take-up spool rolls **72** of dental tape **10** such that:

i) in any given layer of the dental tape, the strands of dental tape **10** forming that layer do not overlap, or, optionally, do not touch or, optionally, have a space therebetween $t_s$ of up to 80mm (or about 80mm) (1/32 (or about 1/32) of an inch) and

ii) the strands of dental tape **10** forming each layer of dental tape **10** overlap with the strands of dental tape **10** forming the preceding layer of dental tape **10** to form intersection angles of about 7 to about 11 degrees (or twice the helix angle θ)

If it is desired to apply a second coating to dental tape **10,** this may be done by locating another coating line and cooling chamber downstream of cooling area **60.**

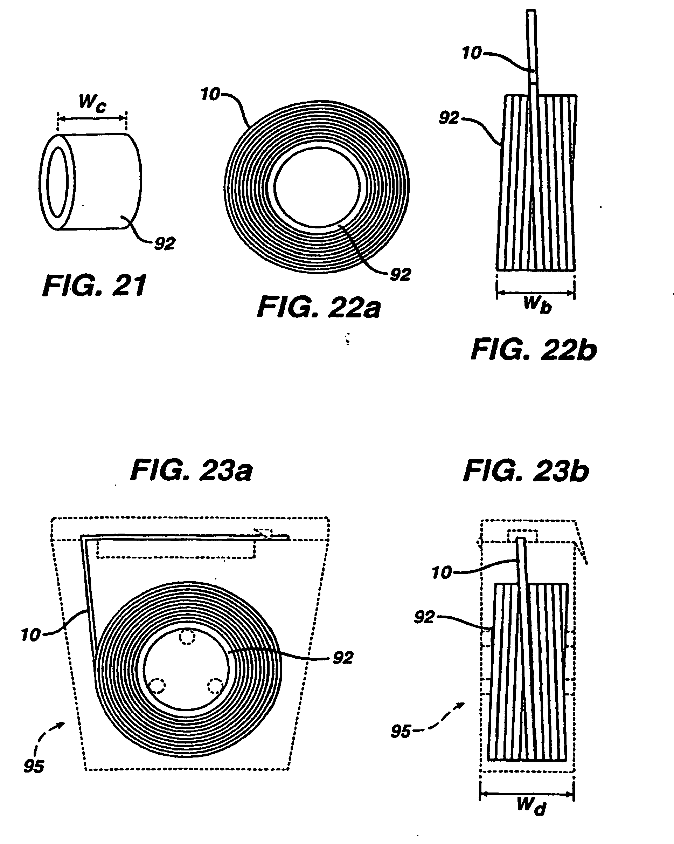

In certain embodiments, spool **72** dental tape **10** is then removed for later processing into bobbins **90.** Bobbins of tape as shown in **FIGS. 22a** and **22b** are formed from dental tape **10** unwound from spool **72** onto bobbin spool cores **92** of selected width $w_c$ as shown in **FIG. 21** and packaged into dispensers **95** of selected width $w_d$ for use by consumers as shown in **FIGS. 23a** and **23b.** In certain embodiments, the bobbin spool cores **92** have an aspect ratio of greater than about 2:1, optionally about 3:1, where the aspect ratio is the ratio of bobbin spool diameter to width. The dental tape **10** winds from spool **72** onto the bobbin spool cores **92** to form tape bobbins where the wound tape widths $w_b$ such that wound tape width $w_b$ exceeds the width of the bobbin spool core $w_c$ by no more that 10% (or about 10%), optionally, 5% (or about 5%), optionally 2.5% (or about 2.5%), optionally 1% (or about 1%). Hence, the inventive rewinding system **70** which produces helix angles θ of from about 3.5 degrees to about 5.5 degrees ensures that the wound tape widths $w_b$ of the finished tape bobbins formed from spool **72** do not telescope so as to interfere with the packaging of the finished tape bobbin into dispensers **95** specifically designed to movably accommodate bobbin spool cores **92** of widths $w_c$. More generally, the inventive rewinding system **70** permits the use of narrower width dispensers particularly in cases where the tape or floss is made of an elastomeric material.

Several examples of the present invention are set forth below to further illustrate the nature of the invention and the manner of carrying it out. However, the invention should not be considered as being limited to the details thereof.

In the following Examples, the mentioned percentages are weight percentages.

**Example 1**

Dental tape spool rolls were formed in accordance with the coating and winding processes of the present invention and using the component sizes and/or type described below and summarized in Table I.

TABLE I

| Component | Type/Size |
|---|---|
| Pulley **82e** | 14 Teeth |
| Pulley **82d** | 17 Teeth |
| Pulley **82c** | 19 Teeth |
| Pulley **82f** | 14 Teeth |
| Pulley **82g** | 16 Teeth |
| Pulley **82h** | 20 Teeth |
| Traversing Cam Guide Traverse | 29.2cm (11.5 inches), 6 turns end to end cam |

Ordering the above pulley sizes sequentially (e.g., 82e is connected to 82d which is connected 82c etc. as shown in FIG. 2) and determining the product of the ratios of the sizes of the sequentially ordered pulleys or Ratio A (as shown in I below)

$$\text{Ratio A} = P_1/P_2 \text{ X } P_3/P_4 \text{ X } P_{Z-1}/P_Z \qquad \text{I}$$

Where $P_1$ to $P_Z$ are the sizes of the pulleys sequentially ordered from spool **72** and to the traverse barrel cam **86** of rewinding system **70,** results in the following ratio:

**Ratio A**

$$= (\text{Pulley } 82e \, / \, \text{Pulley } 82d) \, X \, (\text{Pulley } 82c \, / \, \text{Pulley } 82f) \, X \, (\text{Pulley } 82g \, / \, \text{Pulley } 82h)$$

$$= (14/17) \, X \, (19/14) \, X \, (16/20) = 0.8941$$

A traverse barrel cam was selected to provide a traversing cam guide traverse of 29.2cm (11.5 inches) end to end for every 6 revolutions of spool **72.** This results in a cam advance equal to the following:

$$\text{Cam Advance} = \text{Cam Guide Traverse } /6 \text{ Revolutions of Traverse Barrel Cam}$$

$$= 11.5 / 6$$

$$= 4.868\text{cm} \, (1.9166 \text{ inches}) \text{ per Traverse Barrel Cam revolution}$$

Ratio A indicates that for each revolution of the spool **72,** the traverse barrel cam **86** travels 0.8941 of the spool revolution. This results in the following travel distance for the traversing cam guide **76** per revolution of spool **72:**

$$\text{Travel Distance of traversing cam guide per revolution of spool}$$

$$= \text{Cam Pulley Ratio } X \text{ Cam Advance} = 0.8941 \, X \, 1.9166$$

$$= 4.34\text{cm} \, (1.71 \text{ inches}) \text{ per spool revolution}$$

The core diameter $d_s$ of spool **72** was measured to be 15.77cm (6.21 inches), therefore, the distance traveled by any point on the outer surface of the core of spool 72 after one revolution of spool **72** or circumference C can be calculated as follows:

$$\text{Circumference C } = 15.77\text{cm} \, (6.21 \text{ inches}) \, X \, \pi = (6.21)3.1411 = 49.5\text{cm} \, (19.5 \text{ inches})$$

The helix angle $\theta$ (the angle formed by a strand of dental tape and plane $r\Phi$ of the spool which is perpendicular to the longitudinal axis z of the spool as shown in **FIG. 19)** formed by dental tape **10** as it is initially wound around the core of spool **72** can then be calculated as follows:

$$\text{Travel Distance of traversing cam guide per spool revolution / Circumference C}$$
$$= 1.71 / 19.5$$

$$1.71 / 19.5 = 0.0876 = \sin^{-1} \theta \text{ (Helix Angle)}$$

Where Helix Angle $\theta = 5.03°$

As will be understood by the skilled artisan, as the spool 72 roll grows, the helix angle decreases. For example, as 2.54cm (one inch) of dental tape is wound onto the core of spool 72, helix angle $\theta$ decreases. This is exemplified as follows:

The diameter of spool after adding 2.54cm (one inch) layer of tape = 15.77cm (6.21 inches) + 5.08cm (2 inches) (2.54cm (1 inch) added layer results in diameter increasing by 5.08cm (2 inches)) = 20.8cm (8.21 inches), hence:

Circumference of Spool with Tape = diameter of spool with tape X π = (8.21)3.1411 = 65.3cm (25.7 inches)

Travel distance of traversing cam guide per spool revolution / Circumference of Spool with Tape = 4.34 / 65.3 cm (1.71 / 25.7 inches) = 0.066 = sin-1 θ' (Helix Angle)

Where Helix Angle 0' = 3.8°

Hence, as about 2.54cm (an inch) of material is wound around the spool, the helix angle chances by about 1° (θ - θ' = 5.03° - 3.8° = 1.5°).

Using the above traverse barrel cam and pulley sizes, Rolls 1-7 (representative of spool **72** in **FIG. 1**) were formed and, then, Rolls 1-7 were subsequently used to form separate tape bobbins (representative bobbins formed on bobbin spool **90** in **FIG. 1**). The parameters of the formed rolls and coating and rewinding process are summarized in **Tables II** and **III.**

TABLE II (Wax Coating Formulation)

| Ingredient | Amount (%) |
|---|---|
| Microcrystaline Wax[1] | 82% |
| Flavor | 17% |
| Sodium Saccharin | 1% |
| Multiwax-W445, supplied by Crompton Corp. Petrolia, Pa | |

TABLE III

| Process Parameters | Roll 1 | Roll 2 | Roll 3 | Roll 4 | Roll 5 | Roll 6 | Roll 7 |
|---|---|---|---|---|---|---|---|
| Line Speed in meters per sec (feet per min) | 8.1 (1600) | 8.1 (1600) | 8.1 (1600) | 8.1 (1600) | 8.1 (1600) | 8.1 (1600) | 8.1 (1600) |
| Tape Tension prior to rewinding on rolls (grams-force) | 190 | 190 | 200 | 205 | 205 | 200 | 210 |
| Tank Temp in Celcius (°F) | 93 (200) | 93 (200) | 93 (200) | 93 (200) | 93 (200) | 93 (200) | 93 (200) |
| Die Temp in Celcius (°F) | 93 (200) | 93 (200) | 93 (200) | 93 (200) | 93 (200) | 93 (200) | 93 (200) |
| Tape (yam) Start Wt (gams). | 3738 | 2907 | 3994 | 2998 | 2257 | 3804 | 2977 |
| Tape (yam) Finish Wt (grams) . | 2907 | 2079 | 2998 | 2257 | 1364 | 2977 | 2131 |

(continued)

| Process Parameters | Roll 1 | Roll 2 | Roll 3 | Roll 4 | Roll 5 | Roll 6 | Roll 7 |
|---|---|---|---|---|---|---|---|
| Tape (yam) Wt. (grams) | 831 | 828 | 996 | 741 | 893 | 827 | 846 |
| Coated Tape and Core (grams) | 2578 | 2661 | 2704 | 2637 | 2654 | 2704 | 2630 |
| Core Tare (grams) | 1398 | 1462 | 1309 | 1367 | 1357 | 1474 | 1370 |
| Coated Tape Wt. (grams) | 1180 | 1199 | 1395 | 1270 | 1297 | 1230 | 1260 |
| Wax Added[1] (grams) | 349 | 371 | 409 | 329 | 406 | 403 | 414 |
| Wax Add-on %[2] | 29.5 | 31.3 | 306 | 30.7 | 31.2 | 32.7 | 32.8 |
| Wt. Roll[3]) (lbs.)t | 2.60 | 2.65 | 2.94 | 2.35 | 2.86 | 2.71 | 2.77 |
| 'Wax Added = Tape Wt. - Coated Tape Wt. [2]Wax Add-on % = (Waxed Added / Coated Tape Wt.) (100) [3]Wt. Roll - Coated Tape Wt. / 454 grams/lb. | | | | | | | |

The bobbins produced on bobbin spools of width 10.3mm and percent of bobbins rejected as exhibiting unsatisfactory telescoping are summarized in Table IV.

TABLE IV

| # Bobbin Produced | 236 | 240 | 261 | 213 | 259 | 296 | 251 |
|---|---|---|---|---|---|---|---|
| # Rejects[1] | 0 | 0 | 0 | 8 | 1 | 0 | 0 |
| [1] Rejected bobbins rolls are bobbin rolls in which the width of the wound tape on bobbin exceeded the bobbin dispenser width of 11.2 mm. | | | | | | | |

Total Bobbins Produced = 1711

Total Rejects = 9

% Rejects = 0.5%

**Example 2**

Dental tape spool rolls are formed in accordance with the coating and winding processes of the present invention and using the component sizes and/or type described below and summarized in Table V.

TABLE V

| Component | Type/Size |
|---|---|
| Pulley $P_1$ | 14 Teeth |
| Pulley $P_2$ | 14 Teeth |
| Pulley $P_3$ | 15 Teeth |
| Pulley $P_4$ | 19 Teeth |
| Pulley $P_5$ | 17 Teeth |
| Pulley $P_6$ | 20 Teeth |
| Traversing Cam Guide Traverse | 30.5cm (12 inches), 6 turns end to end cam |

The above pulley sizes should be ordered sequentially (as illustrated FIG. 2, where 82e (which would be $P_1$) is connected to 82d (which would be $P_2$) which is connected 82c (which would be $P_3$) etc.). The product of the ratios of the sizes of the sequentially ordered pulleys or Ratio A can be determined as shown in I below:

EP 2 149 632 B1

$$\text{Ratio A} = P_1/P_2 \text{ X } P_3/P_4 \text{ X } \quad P_{Z-1}/P_Z \qquad \qquad \text{I}$$

Using the size values from Table results in the following Ratio A:

$$\text{Ratio A} = P_1/P_2 \text{ X } P_3/P_4 \text{ X } P_5/P_6) = (14/14) \text{ X } (15/19) \text{ X } (17/20) = 0.671$$

A traverse barrel cam can be selected to provide a traversing cam guide traverse of 30.5cm (12 inches) end to end for every 6 revolutions of traverse barrel cam 86. This results in a cam advance equal to the following:

$$\text{Cam Advance} = \text{Traversing Cam Guide Traverse / 6 Revolutions of Traverse Barrel Cam}$$
$$= 12 / 6 = 5.08\text{cm (2 inches) per Traverse Barrel Cam revolution}$$

Ratio A indicates that for each revolution of the spool 72, the traverse barrel cam 86 travels 0.671 of the spool revolution. This results in the following travel distance for the traversing cam guide 76 per revolution of spool 72:

$$\text{Travel Distance of traversing cam guide per revolution of spool}$$
$$= \text{Cam Pulley Ratio X Cam Advance}$$
$$= 0.671 \text{ X } 2 = 3.4\text{cm (1.342 inches) per spool revolution}$$

A core diameter $d_s$ of spool 72 of 12.7cm (5 inches) can be selected such that the distance traveled by any point on the outer surface of the core of spool 72 after one revolution of spool 72 or circumference C can be calculated as follows:

$$\text{Circumference C } = 12.7\text{cm (5 inches) X } \pi = (5)3.14 = 39.9\text{cm (15.7 inches)}$$

The helix angle $\theta$ (the angle formed by a strand of dental tape and plane $r\varphi$ of the spool which is perpendicular to the longitudinal axis z of the spool as shown in FIG. 19) which forms by dental tape **10** as it is initially wound around the core of spool **72** can then be calculated as follows:

$$\text{Travel Distance of traversing cam guide per spool revolution / Circumference C}$$
$$= 1.342 / 15.7$$

$$1.342 / 15.7 = 0.0854 = \sin^{-1} \theta \text{ (Helix Angle)}$$

Where Helix Angle $\theta = 4.9°$

As 2.54cm (one inch) of dental tape is wound onto the core of spool 72, helix angle $\theta$ decreases. This can be calculated as follows:

14

The diameter of spool after 1 adding 2.54 cm (one inch) layer of tape = 12.7cm (5 inches) + 5.08cm (2 inches) (2.54cm (1 inch) added layer results in diameter increasing by 5.08cm (2 inches)) = 17.8cm (7 inches), hence:

Circumference of Spool with Tape = diameter of spool with tape X $\pi$ = (7)3.14 = 55.8cm (21.98 inches)

Travel distance of traversing cam guide per spool revolution / Circumference of Spool with Tape

= 3.4 / 55.8 cm (1.342 / 21.98 inches) = 0.061 = sin-1 θ' (Helix Angle)

Where Helix Angle θ' = 3.5°

Therefore, as about 2.54cm (an inch) of material is wound around the spool, the helix angle changes by about 1° (θ - θ' = 4.9° - 3.5° = 1.4°).

Using the above traverse barrel cam and pulley sizes, rolls (representative of spool 72 in **FIG. 1**) can be formed, which rolls can subsequently be used to form separate tape bobbins. (representative bobbins formed on bobbin spool **90** in **FIG. 1**).

**Example 3**

Dental tape spool rolls are formed in accordance with the coating and winding processes of the present invention and using the component sizes and/or type described below and summarized in Table VI.

TABLE VI

| Component | Type/Size |
|---|---|
| Pulley $P_1$ | 14 Teeth |
| Pulley $P_2$ | 14 Teeth |
| Pulley $P_3$ | 14 Teeth |
| Pulley $P_4$ | 14 Teeth |
| Pulley $P_5$ | 16 Teeth |
| Pulley $P_6$ | 20 Teeth |
| Traversing Cam Guide Traverse | 30.5cm (12 inches), 5 turns end to end cam |

The above pulley sizes should be ordered sequentially (as illustrated **FIG. 2,** where **82e** (which would be $P_1$) is connected to **82d** (which would be $P_2$) which is connected **82c** (which would be $P_3$) etc.). The product of the ratios of the sizes of the sequentially ordered pulleys or Ratio A can be determined as shown in I below:

$$\text{Ratio A} = P_1/P_2 \text{ X } P_3/P_4 \text{ X } \quad P_{Z\text{-}1}/P_Z \qquad \text{I}$$

Using the size values from Table results in the following Ratio A:

$$\text{Ratio A} = P_1/P_2 \times P_3/P_4 \times P_5/P_6) = (14/14) \times (14/14) \times (16/20) = 0.80$$

A traverse barrel cam can be elected to provide a traversing cam guide traverse of 30.5cm (12 inches) end to end for every 5 revolutions of traverse barrel cam **86.** This results in a cam advance equal to the following:

$$\text{Cam Advance}$$

$$= \text{Traversing Cam Guide Traverse} / 5 \text{ Revolutions of Traverse Barrel Cam}$$

$$= 12 / 5 = 6.1\text{cm (2.4 inches) per Traverse Barrel Cam revolution}$$

Ratio A indicates that for each revolution of the spool 72, the traverse barrel cam 86 travels 0.80 of the spool revolution. This results in the following travel distance for the traversing cam guide 76 per revolution of spool 72:

$$\text{Travel Distance of traversing cam guide per revolution of spool}$$

$$= \text{Cam Pulley Ratio} \times \text{Cam Advance}$$

$$= 0.80 \times 2.4 = 4.9\text{cm (1.92 inches) per spool revolution}$$

A core diameter $d_s$ of spool 72 of 17.8cm (7 inches) can be selected such that the distance traveled by any point on the outer surface of the core of spool 72 after one revolution of spool 72 or circumference C can be calculated as follows:

$$\text{Circumference C} = 12.7\text{cm (5 inches)} \times \pi = (7)3.14 = 55.8\text{cm (21.98 inches)}$$

The helix angle θ (the angle formed by a strand of dental tape and plane of the spool rφ which is perpendicular to the longitudinal axis of the spool as shown in FIG. 19) which forms by dental tape 10 as it is initially wound around the core of spool 72 can then be calculated as follows:

$$\text{Travel Distance of traversing cam guide per spool revolution} / \text{Circumference C}$$
$$= 1.92/ 21.98$$

$$1.92/ 21.98 = 0.0873 = \sin^{-1} \theta \text{ (Helix Angle)}$$

Where Helix Angle θ = 5.01°

As 2.54cm (one inch) of dental tape is wound onto the core of spool 72, helix angle θ decreases. This can be calculated as follows:

$$\text{The diameter of spool after 1 adding 2.54cm (one inch) layer of tape} = 17.8\text{cm (7 inches)}$$

$$+ 5.08\text{cm (2 inches)} \quad (2.54\text{cm (1 inch) added layer results in diameter increasing by}$$

$$5.08\text{cm (2 inches))} = 22.9\text{cm (9 inches)}$$

Circumference of Spool with Tape = diameter of spool with tape X $\pi$ = (9)3.14

= 71.8cm (28.26 inches)

Travel distance of traversing cam guide per spool revolution / Circumference of Spool with Tape

= 4.9 / 71.8 cm (1.92 / 28.26 inches) = 0.068 = sin-1 $\theta$' (Helix Angle)

Where Helix Angle $\theta$' = 3.9°

Therefore, as about 2.54cm (an inch) of material is wound around the spool, the helix angle chances by about 1° ($\theta$ - $\theta$' = 5.01° - 3.9° = 1.11°).

Using the above traverse barrel cam and pulley sizes, rolls (representative of spool 72 in **FIG. 1**) can be formed, which rolls can subsequently be used to form separate tape bobbins (representative bobbins formed on bobbin spool **90** in **FIG. 1**).

**Claims**

1. A process for coating high surface area tape, comprising the steps of:

   a. providing tape (250) having a first side and a second side, the first side being opposite the second side;
   b. providing a die coating mechanism (110) comprising;

      i. a base (120) having a horizontal plane;
      ii. an entrance slot (162) for receiving and/or orientating the tape (250) such that the first and second sides are perpendicular to the horizontal plane of the base (120); and
      iii. an entrance pool (172) having an inlet for receiving a coating composition (5) and first and second passage bore outlets (174) for delivering the coating composition (5) from the first passage bore outlet to the first side of the tape (250) and from the second passage bore outlet to the second side of the tape (250) as the tape (250) passes the first and second passage bore outlets (174); and

   c. passing the tape through the entrance slot of the die coating mechanism for coating by the die coating mechanism.

2. The process according to Claim 1, wherein the tape (250) has a surface area that is either: about 15% greater, about 20% greater, or about 25% greater than the surface area of a non-textured tape of equivalent surface dimensions.

3. The process according to Claim 1 or Claim 2, wherein the die coating mechanism (110) further comprises at least two rollers (200) positioned to receive the tape (250) from the entrance slot (162).

4. The process according to Claim 3, wherein the die coating mechanism (110) further comprises at least three rollers (200) positioned to receive the tape (250) from the entrance slot (162).

5. The process according to Claim 4, wherein the die coating mechanism (110) further comprises at least four rollers (200) positioned to receive the tape (250) from the entrance slot (162).

6. The process according to any one of Claims 1 to 5, wherein the die coating mechanism (110) further comprises an exit slot (182) for receiving the coated tape (252) and uniformly spreading the coating (5) onto the tape (252).

7. The process according to Claim 6, wherein the entrance slot (162) maintains the tape (250) in an orientation perpendicular to the horizontal plane of the base (120).

8. The process according to Claims 6 or Claim 7, wherein the exit slot (182) is sized such that gravity does not cause the lower portion of the tape (250) to receive more coating than the upper portion of the tape (250).

9. The process according to any one of Claims 3 to 8, wherein the die coating mechanism (110) further comprises a heater (134) in association with the rollers (200) for heating the coating (5) and aiding adherence of the coating (5) to the tape (250).

10. The process according to any one of Claims 1 to 9, wherein the high surface area tape is made from an elastomeric material.

11. The process according to Claim 10, wherein the elastomeric material is selected from the group consisting of polyamide-polyether block copolymers; polyester-polyether block copolymers and polyester-polyester block copolymers; aliphatic thermoplastic polyurethane elastomers; aromatic thermoplastic polyurethane elastomers; thermoplastic polyolefin elastomer and mixtures thereof.

12. The process according to any one of Claims 1 to 11, wherein the high surface area tape (250) is ribbed tape.

13. The process according to Claim 12, wherein the ribbed tape is made from an elastomeric material.

14. The process according to any one of Claims 1 to 13, wherein the tape (250) is dental tape.

**Patentansprüche**

1. Verfahren zum Beschichten eines hochoberflächigen Bandes, welches die folgenden Schritte aufweist:

   a. Bereitstellen eines Bandes (250) mit einer ersten Seite und einer zweiten Seite, wobei die erste Seite der zweiten Seite gegenüberliegt;
   b. Bereitstellen eines Die-Coating-Mechanismus (Werkzeugbeschichtungsmechanismus) (110), welcher aufweist:

      i. einen Sockel (120) mit einer horizontalen Ebene;
      ii. einen Eintrittsschlitz (162) zum Aufnehmen und/oder Ausrichten des Bandes (250), derart, dass die erste und die zweite Seite senkrecht zu der horizontalen Ebene des Sockels (120) sind; und
      iii. ein Eintrittsbad (172) mit einem Einlass zum Aufnehmen einer Beschichtungszusammensetzung (5) und einem ersten und einem zweiten Durchgangsbohrungs-Auslass (174) zum Zuführen der Beschichtungszusammensetzung (5) aus dem ersten Durchgangsbohrungs-Auslass zur ersten Seite des Bandes (250) und aus dem zweiten Durchgangsbohrungs-Auslass zur zweiten Seite des Bandes (250), wenn sich das Band (250) am ersten und am zweiten Durchgangsbohrungs-Auslass (174) vorbeibewegt; und

   c. Hindurchbewegen des Bandes durch den Eintrittsschlitz des Die-Coating-Mechanismus zum Beschichten mittels des Die-Coating-Mechanismus.

2. Verfahren nach Anspruch 1, wobei das Band (250) eine Oberflächengröße aufweist, welche entweder um etwa 15 % größer oder um etwa 20 % größer oder um etwa 25 % größer als die Oberflächengröße eines nicht texturierten Bandes mit äquivalenten Oberflächenabmessungen ist.

3. Verfahren nach Anspruch 1 oder Anspruch 2, wobei der Die-Coating-Mechanismus (110) ferner mindestens zwei Rollen (200) aufweist, die so positioniert sind, dass sie das Band (250) von dem Eintrittsschlitz (162) aufnehmen.

4. Verfahren nach Anspruch 3, wobei der Die-Coating-Mechanismus (110) ferner mindestens drei Rollen (200) aufweist, die so positioniert sind, dass sie das Band (250) von dem Eintrittsschlitz (162) aufnehmen.

5. Verfahren nach Anspruch 4, wobei der Die-Coating-Mechanismus (110) ferner mindestens vier Rollen (200) aufweist, die so positioniert sind, dass sie das Band (250) von dem Eintrittsschlitz (162) aufnehmen.

6. Verfahren nach einem der Ansprüche 1 bis 5, wobei der Die-Coating-Mechanismus (110) ferner einen Austrittsschlitz (182) zum Aufnehmen des beschichteten Bandes (252) und gleichmäßigen Verteilen der Beschichtung (5) auf dem Band (252) aufweist.

**7.** Verfahren nach Anspruch 6, wobei der Eintrittsschlitz (162) das Band (250) in einer Ausrichtung hält, die senkrecht zur horizontalen Ebene des Sockels (120) ist.

**8.** Verfahren nach Anspruch 6 oder Anspruch 7, wobei der Austrittsschlitz (182) so bemessen ist, dass der untere Abschnitt des Bandes (250) nicht infolge der Schwerkraftwirkung mehr Beschichtung als der obere Abschnitt des Bandes (250) erhält.

**9.** Verfahren nach einem der Ansprüche 3 bis 8, wobei der Die-Coating-Mechanismus (110) ferner eine Heizvorrichtung (134), die mit den Rollen (200) in Verbindung steht, zum Erwärmen der Beschichtung (5) und Unterstützen der Haftung der Beschichtung (5) auf dem Band (250) aufweist.

**10.** Verfahren nach einem der Ansprüche 1 bis 9, wobei das hochoberflächige Band aus einem elastomeren Material hergestellt ist.

**11.** Verfahren nach Anspruch 10, wobei das elastomere Material aus der Gruppe ausgewählt ist, welche aus Polyamid-Polyether-Blockcopolymeren; Polyester-Polyether-Blockcopolymeren und Polyester-Polyester-Blockcopolymeren; aliphatischen thermoplastischen Polyurethanelastomeren; aromatischen thermoplastischen Polyurethanelastomeren; thermoplastischen Polyolefinelastomeren und Gemischen davon besteht.

**12.** Verfahren nach einem der Ansprüche 1 bis 11, wobei das hochoberflächige Band (250) ein geripptes Band ist.

**13.** Verfahren nach Anspruch 12, wobei das gerippte Band aus einem elastomeren Material hergestellt ist.

**14.** Verfahren nach einem der Ansprüche 1 bis 13, wobei das Band (250) ein Zahnband ist.

**Revendications**

**1.** Procédé de revêtement d'un ruban de grande superficie, le procédé comprenant les étapes consistant à :

a. prévoir un ruban (250) qui présente une première face et une deuxième face, la première face étant opposée à la deuxième face,
b. prévoir un mécanisme (110) de revêtement à la filière comprenant :

i. une base (120) présentant un plan horizontal,
ii. une fente d'entrée (162) qui reçoit et/ou oriente le ruban (250) de telle sorte que la première et la deuxième face soient perpendiculaires au plan horizontal de la base (120) et
iii. une cavité d'entrée (172) qui présente une entrée destinée à recevoir une composition de revêtement (5) et des sorties (174) d'un premier et d'un deuxième alésage de passage servant à délivrer de manière la composition de revêtement (5) depuis la sortie du premier alésage de passage jusqu'à la première face du ruban (250) et depuis la sortie du deuxième alésage de passage jusqu'à la deuxième face du ruban (250) lorsque le ruban (250) passe devant les sorties (174) du premier et du deuxième alésage de passage et

c. faire passer le ruban par la fente d'entrée du mécanisme de revêtement à filière pour le faire revêtir par le mécanisme de revêtement à filière.

**2.** Procédé selon la revendication 1, dans lequel la superficie du ruban (250) est d'environ 15 % plus grande, d'environ 20 % plus grande ou d'environ 25 % plus grande que la superficie d'un ruban non texturé dont les dimensions de surface sont équivalentes.

**3.** Procédé selon la revendication 1 ou la revendication 2, dans lequel le mécanisme (110) de revêtement à la filière comprend en outre au moins deux cylindres (200) disposés de manière à recevoir le ruban (250) provenant de la fente d'entrée (162).

**4.** Procédé selon la revendication 3, dans lequel le mécanisme (110) de revêtement à la filière comprend en outre au moins trois cylindres (200) disposés de manière à reprendre le ruban (250) qui provient de la fente d'entrée (162).

**5.** Procédé selon la revendication 4, dans lequel le mécanisme (110) de revêtement à la filière comprend en outre au moins quatre cylindres (200) disposés de manière à reprendre le ruban (250) provenant de la fente d'entrée (162).

**6.** Procédé selon l'une quelconque des revendications 1 à 5, dans lequel le mécanisme (110) de revêtement à la filière comprend en outre une fente de sortie (182) qui reprend le ruban revêtu (252) et étale de manière uniforme le revêtement (5) sur le ruban (252).

**7.** Procédé selon la revendication 6, dans lequel la fente d'entrée (162) maintient le ruban (250) dans une orientation perpendiculaire au plan horizontal de la base (120).

**8.** Procédé selon la revendication 6 ou la revendication 7, dans lequel la fente de sortie (182) est dimensionnée de telle sorte que la gravité n'amène pas la partie inférieure du ruban (250) à reprendre davantage de revêtement que la partie supérieure du ruban (250).

**9.** Procédé selon l'une quelconque des revendications 3 à 8, dans lequel le mécanisme (110) de revêtement à la filière comprend en outre un dispositif de chauffage (134) associé aux cylindres (200) pour chauffer le revêtement (5) et contribuer à assurer l'adhérence du revêtement (5) sur le ruban (250).

**10.** Procédé selon l'une quelconque des revendications 1 à 9, dans lequel le ruban à haute superficie est réalisé en matériau élastomère.

**11.** Procédé selon la revendication 10, dans lequel le matériau élastomère est sélectionné dans l'ensemble constitué des copolymères séquencés de polyamide de polyéther, des copolymères séquencés de polyester et de polyéther et des copolymères séquencés de polyester et de polyester, des élastomères thermoplastiques aliphatiques de polyuréthane, des élastomères thermoplastiques aromatiques de polyuréthane, des élastomères thermoplastiques de polyoléfines et de leurs mélanges.

**12.** Procédé selon l'une quelconque des revendications 1 à 11, dans lequel le ruban (250) à haute superficie est un ruban nervuré.

**13.** Procédé selon la revendication 12, dans lequel le ruban nervuré est réalisé en un matériau élastomère.

**14.** Procédé selon l'une quelconque des revendications 1 à 13, dans lequel le ruban (250) est un ruban dentaire.

FIG. 1

FIG. 2

# FIG. 3

FIG. 4

# FIG. 5

## FIG. 6

EP 2 149 632 B1

**FIG. 7**

EP 2 149 632 B1

## FIG. 8

## FIG. 9

**FIG. 10**

**FIG. 11**

**FIG. 12**

**FIG. 13**

**FIG. 14**

*FIG. 15*

*FIG. 16*

*FIG. 17*

*FIG. 18*

## FIG. 19

## FIG. 20

$W_c$

**FIG. 21**

10

92

92

**FIG. 22a**

10

92

$W_b$

**FIG. 22b**

**FIG. 23a**

10

92

95

**FIG. 23b**

10

92

95

$W_d$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03068173 A1
- US 5603921 A
- US 5755246 A
- EP 0021677 A
- US 026839 A
- US 20080230087 A1
- US 937025 A
- US 20090120455 A1
- US 6591844 B, Barlow
- US 6029678 A, Tsao